# FASCICULE DE BREVET EUROPEEN

(11) **EP 3 137 526 B1**
(45) Date de publication et mention de la délivrance du brevet: **02.01.2019**
(21) Numéro de dépôt: 15717177.8
(22) Date de dépôt: 21.04.2015
(51) Int. Cl.: C08G 18/48, C08G 18/76, C08G 18/10, C08G 18/18

(54) **PROCÉDÉ DE FABRICATION PAR MICROCOULÉE D'UNE MOUSSE DE POLYURÉTHANE**
VERFAHREN ZUR HERSTELLUNG EINES POLYURETHANSCHAUMSTOFFS DURCH MIKROGUSS
METHOD FOR PRODUCING A POLYURETHANE FOAM BY MICROCASTING

(30) Priorité: 29.04.2014 FR 1453898
(43) Date de publication de la demande: 08.03.2017
(73) Titulaire: Compagnie Générale des Etablissements Michelin, 63000 Clermont-Ferrand (FR)
(72) Inventeur: PARFONDRY, Alain, B-1150 Bruxelles (BE); DELFINO, Antonio, F-63040 Clermont-Ferrand Cedex 9 (FR)
(74) Mandataire: Desbordes, Guillaume
(86) Numéro de dépôt international: PCT/EP2015/058599
(87) Numéro de publication internationale: WO 2015/165776

(56) Documents cités:
- EP-A2- 1 101 782
- WO-A1-2013/182477

## Description

### 1. DOMAINE DE L'INVENTION

L'invention est relative aux procédés de fabrication de mousses de polymères.

Elle est plus particulièrement relative à la formulation des polyuréthanes, aux procédés de fabrication de mousses de polyuréthane et notamment à l'utilisation de telles mousses pour réduire le bruit émis par les pneumatiques lors du roulage des véhicules.

### 2. ETAT DE LA TECHNIQUE

On rappellera ici brièvement qu'un polyuréthane (en abrégé « PU »), de manière générale, est le produit de réaction (condensation) d'un polyisocyanate (composé porteur d'au moins deux fonctions isocyanate -NCO) et d'un polyol (composé porteur d'au moins deux fonctions alcool -ROH), le polyol utilisé ayant généralement ses fonctions alcools fixées soit sur des polyéthers, soit sur des polyesters.

Pour réduire les bruits de roulage d'un pneumatique, en particulier le bruit de cavité, il est connu de pourvoir sa paroi interne d'une couche de mousse en PU.

En particulier, la demande de brevet WO 2013/182477 déposée par les Demanderesses a décrit un pneu, à l'état vulcanisé, dont la paroi interne est pourvue d'une couche de mousse en PU à base d'un diphénylméthane diisocyanate (ou méthylène diphényl-diisocyanate, en abrégé « MDI ») et d'un polyol spécifique à fort taux d'oxyde d'éthylène ayant un taux d'oxyde d'éthylène supérieur à 50% (% en poids).

La mousse en PU est fabriquée in situ, directement dans le pneu vulcanisé, par « microcoulée » (c'est-à-dire selon de très bas débits) simultanée des réactifs, prépolymère uréthane et eau, dans la cavité de l'enveloppe de pneumatique en rotation. Ainsi, le liquide réactif (composant liquide A) à base de MDI et polyol s'expanse immédiatement au contact de l'agent moussant (eau, composant liquide B) en une mousse qui se solidifie rapidement sur la surface intérieure du pneumatique, mousse légère et absorbant efficacement le bruit.

Le procédé décrit permet notamment de mettre en place la mousse PU en une seule étape, sans nécessiter toutes les opérations préalables (déjà connues de l'art antérieur) de préparation d'une mousse, découpage aux dimensions souhaitées puis collage de la mousse à l'intérieur du pneu. Les propriétés physiques de la mousse PU, notamment ses performances acoustiques, peuvent être ajustées par la formulation spécifique retenue, la quantité de mousse appliquée. Une grande liberté de formes est possible sans coût prohibitif puisque le liquide réactif peut être déposé suivant un dessin prédéfini.

Toutefois, le procédé décrit présente aussi un certain nombre d'inconvénients.

Tout d'abord, il est mis en oeuvre à l'aide d'une machine de microcoulée du type à basse pression (machine « Dosamix » de la société Secmer ; pression d'environ 4 bars). Le débit, la quantité et la viscosité des deux composants liquides étant très différents (par exemple seulement 2 parts d'eau pour 100 parts de prépolymère ; débit d'eau d'environ 0,14 g/s), le dosage et le mélangeage se sont révélés particulièrement délicat à mettre en oeuvre, en conditions semi-industrielles, en particulier en début et fin de coulée, compte tenu des très faibles quantités de mousse à produire pour chaque cycle de traitement d'une enveloppe de pneumatique.

En outre, ces machines basse pression, à volume de mélangeage constant, nécessitent un rinçage de la chambre de mélangeage après chaque coulée, inconvénient auquel se rajoutent ceux de devoir éliminer le solvant et les résidus de rinçage, les pertes de matière, et bien entendu le coût global final qui en résulte.

Tous les inconvénients ci-dessus sont relativement incompatibles avec des cadences élevées de fabrication, particulièrement pour des durées de cycle très courtes (typiquement moins de 1 min) et des débits très bas (typiquement moins de 1 1/min), tels que ceux visés pour le traitement, à l'échelle industrielle, de séries importantes d'enveloppes de pneumatiques.

### 3. BREVE DESCRIPTION DE L'INVENTION

Or, poursuivant leurs recherches, les Demanderesses ont trouvé un procédé de fabrication nouveau qui permet de pallier les inconvénients ci-dessus, ce procédé étant adapté à des mélangeurs du type à haute pression comme à basse pression.

En conséquence, la présente invention concerne un procédé de fabrication d'une mousse de polyuréthane à base de MDI et d'un polyol à fort taux d'oxyde d'éthylène ayant un taux d'oxyde d'éthylène supérieur à 50% (% en poids), dans lequel on mélange, sous pression, pour formation d'un liquide moussant précurseur de mousse de polyuréthane :
- un premier liquide réactif, dit liquide A, comportant d'une part (i) un prépolymère uréthane à base d'une première partie du MDI et d'une première partie dudit polyol, d'autre part (ii) la seconde partie du MDI à l'état libre, ledit prépolymère étant en solution dans cette seconde partie de MDI à l'état libre ;
- avec un second liquide réactif, dit liquide B, comportant la seconde partie dudit polyol et de l'eau en tant qu'agent de moussage,
ce procédé étant caractérisé en ce que la quantité de ce polyol à fort taux d'oxyde d'éthylène dans le liquide B représente entre 25% et 75% en poids du total de ce polyol.

On a constaté que, grâce à la formulation spécifique du PU et particulièrement à son taux très élevé d'oxyde d'éthylène, il était possible d'augmenter de manière très importante la quantité de polyol dans le liquide B sans dégrader pour autant les propriétés et performance de la mousse finale, ce qui était particulièrement inattendu. Grâce à cela, il devient possible d'utiliser des machines de mélangeage à haute pression.

Le procédé de l'invention est avantageusement mis en oeuvre pour le coulage en continu du liquide moussant précurseur directement dans la cavité d'une enveloppe de pneumatique en rotation sur elle-même, pour formation et dépôt in situ de la mousse de PU à l'intérieur de ladite cavité.

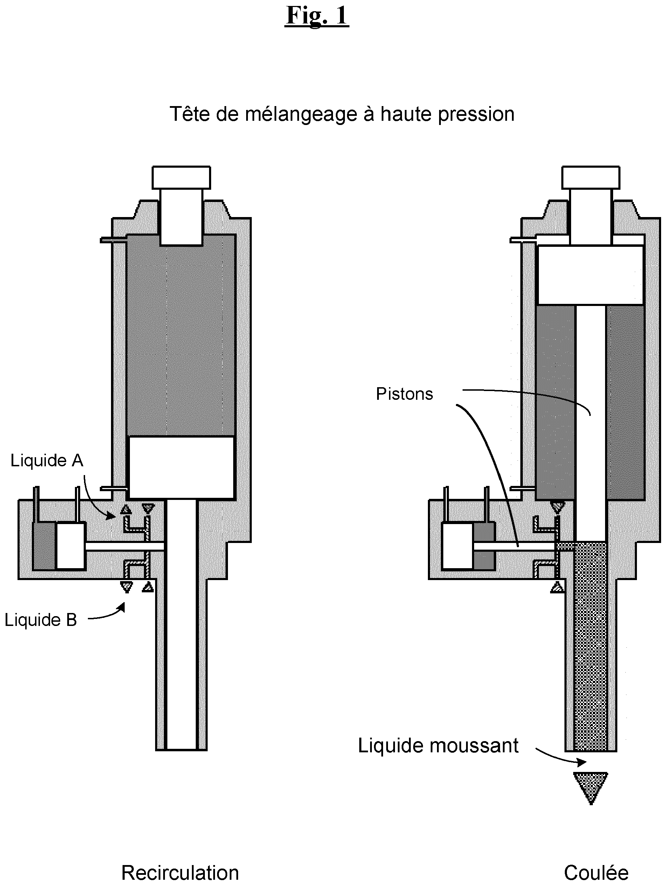

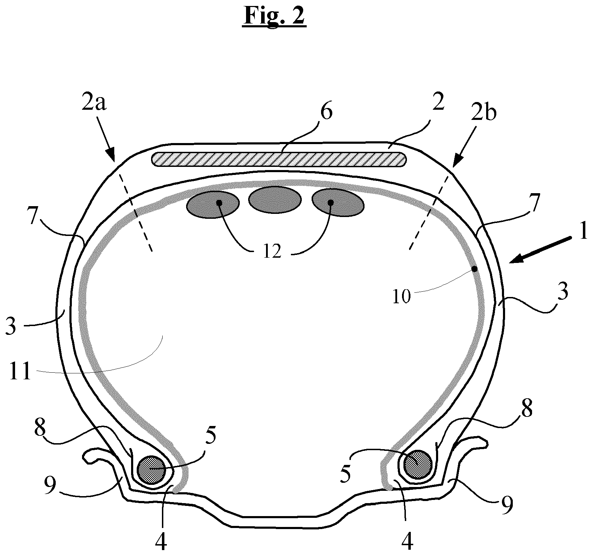

L'invention ainsi que ses avantages seront aisément compris à la lumière de la description et des exemples de réalisation qui suivent, ainsi que des figures 1 et 2 relatives à ces exemples qui schématisent de manière très simple, sans respect d'une échelle spécifique :
- le principe d'une tête de mélangeage haute pression dans une machine de microcoulée de polyuréthane convenant au procédé de l'invention (Fig. 1) ;
- en coupe radiale un exemple de pneumatique, vulcanisé, dont la cavité interne est pourvue d'un cordon de mousse PU (Fig. 2).

### 4. DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le procédé de l'invention, pour fabriquer par microcoulée une mousse de polyuréthane à base d'un (au moins un, c'est-à-dire un ou plusieurs) « MDI » et d'un (au moins un, c'est-à-dire un ou plusieurs) polyol spécifique à fort taux d'oxyde d'éthylène ayant un taux d'oxyde d'éthylène élevé, supérieur à 50 % (% en poids), comporte donc comme étape connue (selon la demande WO 2013/182477 précitée) celle de mélanger, sous pression, pour la formation d'un liquide moussant précurseur de mousse de polyuréthane :
- un premier liquide réactif, dit liquide A, comportant un prépolymère uréthane (déjà formé) à base d'une première partie du MDI et d'une première partie dudit polyol, ledit prépolymère étant en solution dans la seconde partie de MDI à l'état libre ;
- avec un second liquide réactif, dit liquide B, comportant la seconde partie dudit polyol et de l'eau en tant qu'agent de moussage.

L'étape de mélangeage ci-dessus est déjà connue de la demande WO 2013/182477 précitée dans laquelle on le rappelle d'une part le mélangeage est mis en oeuvre dans une machine conventionnelle à basse pression, et d'autre la proportion dudit polyol spécifique dans le liquide B est nulle (ou très faible), la voie dite « prépolymère » (avec pré-réaction totale ou quasi-totale des deux composants du polyol dans le liquide A) étant en effet clairement préférée selon l'enseignement de cette demande.

Il est à noter que, *a contrario*, dans le cas d'une pré-réaction partielle (pré-mélangeage dans le liquide A) des deux constituants de base (MDI et polyol) avant le moussage final, conformément au procédé de la présente invention, on parlera plus précisément de « voie semi-prépolymère » ou « voie quasi-prépolymère ».

Ceci étant rappelé, le procédé de l'invention est donc caractérisé en ce que la quantité de polyol à fort taux d'oxyde d'éthylène dans le liquide B est particulièrement élevée par rapport aux enseignements de l'art antérieur, puisque représentant entre 25% et 75% en poids du total dudit polyol, c'est-à-dire du total dudit polyol utilisé dans les liquides A et B. De préférence, cette quantité dudit polyol dans le liquide B représente entre 30% et 70%, plus préférentiellement encore entre 35% et 55% en poids du total dudit polyol.

La quantité d'eau, en tant qu'agent de moussage, dans le liquide B est quant à elle préférentiellement comprise entre 2% et 10%, plus préférentiellement dans un domaine de 3% à 8%, en particulier dans un domaine de 4% à 6% (% en poids total de liquide B).

Cette quantité d'eau est notamment ajustée de telle manière que l'indice NCO (ou index stoechiométrique), lors du moussage, est compris entre 0,7 et 1,3, de préférence entre 0,8 et 1,2. Cet indice, largement répandu dans la technologie des mousses PU notamment expansées à l'eau, représente le rapport molaire [NCO] / [OH) y compris les fonctions OH (soit 2 fois le nombre de moles H₂O) apportées par l'eau ; il est égal à 1 lorsqu'on se trouve dans les proportions stoechiométriques.

L'indice d'hydroxyle (« *OH Number* ») du polyol (I_{OH}, exprimé en mg de KOH/g de polyol, mesuré selon la norme DIN 53240-2) peut varier selon les applications particulières visées. Dans le cas préférentiel d'un procédé selon l'invention appliqué à un coulage de mousse PU dans la cavité d'une enveloppe de pneumatique, cet indice I_{OH} est de préférence compris entre 10 et 180, plus préférentiellement entre 20 et 120 mg de KOH/g, ceci pour la recherche d'un compromis optimisé entre rigidité (ou souplesse) et autres propriétés (en particulier en traction, allongement et déformation rémanente) de cette mousse.

Pour les mêmes raisons que ci-dessus, la masse moléculaire moyenne en nombre (notée « Mn ») dudit polyol est préférentiellement comprise entre 1000 et 12 000 g/mol, plus préférentiellement comprise entre 2000 et 8000 g/mol, cette masse Mn étant calculée de manière connue à partir de deux données fournisseur, l'indice d'hydroxyle ci-dessus et la fonctionnalité Fn de l'initiateur du polyol (nombre de groupes hydroxyle par molécule, aisément déterminable par exemple par une analyse RMN du prépolymère, Mn étant alors égale à 56100 * Fn / I_{OH}).

Le rapport molaire de MDI (total) sur ledit polyol (total) est préférentiellement compris entre 2 et 10, plus préférentiellement entre 3 et 6, en particulier entre 4 et 5.

Dans le procédé de l'invention, le rapport pondéral (liquide B / liquide A) est de préférence supérieur à 0,25, plus préférentiellement compris entre 0,3 et 1,0, en particulier compris dans un domaine de 0,35 à 0,70.

Préférentiellement, le débit total des deux liquides A et B, lors du mélangeage, est compris entre 0,1 et 1 litre/min (soit environ entre 2 et 20 g/s).

Selon un mode de réalisation préférentiel, le MDI est le seul diisocyanate ou, si plusieurs composés diisocyanates sont présents, constitue le diisocyanate majoritaire en poids, représentant préférentiellement dans le dernier cas plus de 50% du poids total des composés diisocyanates. Si plusieurs diisocyanates sont présents, le MDI représente plus préférentiellement encore plus de 70%, en particulier plus de 90% en poids du total des composés diisocyanates. A titre d'exemple d'autre diisocyanate utilisable en coupage avec le MDI, on citera par exemple le TDI (toluène diisocyanate, habituellement utilisé en mélange d'isomères 2,4 et 2,6).

Toutefois, selon un mode de réalisation particulièrement préférentiel, le MDI, en particulier le 4,4'-MDI, est le seul diisocyanate constitutif de la mousse PU du bandage pneumatique de l'invention.

Sont utilisables tous les isomères du MDI (notamment 2,2'-MDI, 2,4'-MDI, 4,4'-MDI) et leurs mélanges, ainsi que des MDI dits polymériques comportant en plus du MDI des oligomères de formule suivante (avec n égal ou supérieur à 1) : 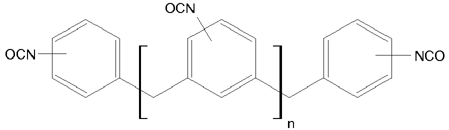 ou des mélanges desdits MDI et MDI polymériques précités. Les composés de type carbodiimide / urétonimine, allophanate, uréthanne, urée, oxazolidone, obtenus par réaction partielle de MDI avec lui-même ou avec des composés hydroxylés, aminés ou époxydés sont également inclus.

Plus préférentiellement, le MDI utilisé est le 4,4'-MDI (4,4'-diphénylméthane diisocyanate), pour rappel de formule : 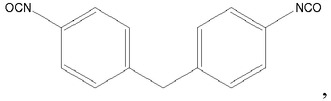 ou, si plusieurs MDI (diphénylméthane diisocyanates) sont utilisés, constitue le MDI majoritaire en poids, représentant préférentiellement dans le dernier cas plus de 50% du poids total des composés MDI ; plus préférentiellement encore, si plusieurs MDI sont présents, le 4,4'-MDI représente plus de 70%, en particulier plus de 90% en poids du total des composés MDI.

Selon un autre mode de réalisation préférentiel, le polyol à fort taux d'oxyde d'éthylène (supérieur à 50%, de préférence supérieur à 70%, plus préférentiellement encore supérieur à 90%), est le seul polyol constitutif de la mousse PU du pneu de l'invention, ou, si plusieurs polyols sont présents, constitue le polyol majoritaire en poids, préférentiellement dans ce dernier cas plus de 50% en poids du total des polyols utilisés.

Si plusieurs polyols sont présents, le polyol à fort taux d'oxyde d'éthylène représente préférentiellement plus de 70%, plus préférentiellement plus de 90% en poids du total des polyols. A titre d'exemples d'autres polyols utilisables en coupage avec le polyol à fort taux d'oxyde d'éthylène, on citera par exemple des polyéthers tels que les polyols polyéther à base d'oxyde de propylène ou d'oxyde de butylène, d'autres monomères époxydes, des polyols polyesters, polycarbonates, polyoxytétraméthylène glycols ou des polyols de structure hybride à base de plusieurs des monomères précités.

Toutefois, selon un mode de réalisation particulièrement préférentiel, le polyol à fort taux d'oxyde d'éthylène (supérieur à 50%, de préférence supérieur à 70%, encore plus préférentiellement supérieur à 90%) est le seul polyol constitutif de la mousse PU.

Préférentiellement, le polyol à fort taux d'oxyde d'éthylène est un polyol polymérisé statistiquement avec de l'oxyde d'éthylène et de l'oxyde de propylène, avec plus préférentiellement entre 50% et 90% en poids d'oxyde d'éthylène et de 10% à 50% d'oxyde de propylène ; plus préférentiellement encore, le taux d'oxyde d'éthylène représente de 70% à 85%, notamment de 75% à 80% en poids d'un tel polyol.

De tels polyols ou polyéthers préférentiels sont bien connus et disponibles commercialement, par exemple auprès de la société BASF sous la dénomination commerciale « Lupranol 2048 », auprès de la société Dow sous la dénomination commerciale « Voranol CP1421 », ou encore auprès de la société Bayer sous la dénomination commerciale « Desmophen 41WB01 ».

Préférentiellement, grâce à la formulation spécifique des liquides A et B décrite ci-dessus, leur mélangeage peut être réalisé par rencontre à contre-courant des composants sous haute pression, c'est-à-dire dans une machine de mélangeage avec tête d'injection du type à haute pression.

Le principe d'une tête de mélangeage haute pression a été schématisée sur la figure 1 annexée, à la fois dans la position de coulée du liquide moussant final et dans celle de recirculation des composants initiaux (liquide A avec excès d'isocyanate et liquide B essentiellement à base de polyol et d'eau).

On voit que les deux composants sont d'abord injectés l'un contre l'autre, mélangés sous haute pression, puis leur mélange (A+B) est coulé, déposé directement, par exemple à l'intérieur de la cavité d'une enveloppe de pneumatique en rotation. La tête de mélangeage est autonettoyante mécaniquement grâce à son piston le plus gros, le plus petit servant à couper l'arrivée des liquides A et B ; un très bon fonctionnement est assuré même après un arrêt prolongé.

Cette technologie haute pression ne nécessite pas de rinçage après coulée, ni solvant de rinçage, ni suppression des résidus de rinçage. Les risques de perte matière sont éliminés, et les coûts de fabrication qui en résultent sont réduits de manière très importante par rapport à une machine conventionnelle à basse pression telle que décrite par exemple dans la demande WO 2013/182477 précitée.

La pression de mélangeage des liquides A et B, dans la tête de mélangeage haute pression, est de préférence supérieure à 50 bars, plus préférentiellement supérieure à 100 bars. Quant à la température de mélangeage, elle est de préférence comprise entre 20°C et 80°C, plus préférentiellement entre 25°C et 75°C.

Bien entendu, la composition initiale de la mousse PU peut comporter également d'autres additifs usuels pour ce type d'application, comme par exemple des précurseurs d'agents de moussage autres que l'eau (par exemple directement un gaz tel que CO₂), des allongeurs de chaîne, des agents réticulants, des charges par exemple du type minérales telles que silice, talc, craie, sels de calcium ou de baryum, ayant un effet thixotropant, des agents de stabilisation par exemple de type alkanolamines, des amines primaires aromatiques, des triols de faible masse moléculaire tels que glycérol, des amines primaires aliphatiques, des catalyseurs tels que des amines tertiaires, des agents tensio-actifs, des anti-oxydants, des agents de modification de la rhéologie, des régulateurs de viscosité ou agents épaississants (voir par exemple demande WO 2013/023125) tels que des polyéthylène oxydes ou des éthers de cellulose à haute masse moléculaire, des colorants ou des pigments.

La mousse en polyuréthane ainsi formée présente une masse volumique apparente à coeur, mesurée selon la norme ISO 845, qui est de préférence comprise entre 0,020 et 0,070 g/cm³, plus préférentiellement dans un domaine de 0,030 à 0,060 g/cm³.

### 5. EXEMPLES DE REALISATION DE L'INVENTION

La mousse PU finale pourrait être préparée préalablement puis découpée aux dimensions souhaitées, par exemple sous forme de bandes ou bandelettes plus étroites, enfin collée à l'intérieur d'un pneu vulcanisé par tout moyen approprié, par exemple à l'aide d'une composition adhésive ou d'un adhésif double face, de manière connue en soi.

Le procédé de l'invention est avantageusement mis en oeuvre pour le coulage du liquide moussant précurseur directement dans la cavité d'une enveloppe de pneumatique en rotation sur elle-même, pour formation et dépôt in situ de la mousse de PU à l'intérieur de ladite cavité, comme expliqué en détail dans les essais qui suivent.

A titre d'exemple, la figure 2 annexée représente de manière très schématique un exemple de coupe radiale de pneu pour véhicule automobile à armature de carcasse radiale, à l'état cuit (c'est-à-dire vulcanisé), susceptible d'être produit par le procédé de l'invention.

Ce pneumatique 1 comporte une zone sommet 2 renforcée par une armature de sommet ou ceinture 6, deux flancs 3 et deux bourrelets inextensibles 4, chacun de ces bourrelets 4 étant renforcé avec une tringle 5. La zone sommet 2 délimitée latéralement par deux épaules (2a, 2b) est surmontée d'une bande de roulement (non représentée sur cette figure schématique, pour simplification), la ceinture 6 étant par exemple constituée d'au moins deux nappes croisées superposées renforcées par des câbles métalliques. Une armature de carcasse 7 est enroulée autour des deux tringles 5 dans chaque bourrelet 4, le retournement 8 de cette armature 7 étant par exemple disposé vers l'extérieur des bandages pneumatiques qui sont ici représentés montés sur leur jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du bandage pneumatique qui est situé à mi-distance des deux bourrelets 4 et passe par le milieu de l'armature de sommet 6).

Ce pneumatique 1 comporte en outre, de manière bien connue, une couche de gomme intérieure 10 (communément appelée " gomme intérieure " ou " *inner liner* ") qui définit la face radialement interne du pneumatique, au contact de la cavité de gonflage 11. Cette couche 10 étanche à l'air permet le gonflement et le maintien sous pression du pneumatique 1 ; ses propriétés d'étanchéité lui permettent de garantir un taux de perte de pression relativement faible, permettant de maintenir le pneumatique gonflé, en état de fonctionnement normal, pendant une durée suffisante, normalement de plusieurs semaines ou plusieurs mois.

Ce pneumatique est caractérisé par le fait que sa paroi interne 10 est au moins en partie recouverte, du côté de la cavité 11, d'une couche 12 de mousse en PU apte à absorber en partie le bruit de cavité. Conformément au procédé de l'invention, cette couche de mousse en PU a été fabriquée in situ par coulée directe des réactifs à l'intérieur de la cavité 11 de pneumatiques en rotation, sur la couche étanche à l'air 10.

Plus précisément, pour l'obtention de cette mousse en PU, dans une machine de microcoulée du type « à haute pression » (type « PSM 3000 » avec tête de mélangeage « GP 600 » de la société Isotherm AG, Suisse) telle que schématisée sur la figure 1 déjà commentée précédemment, on a mélangé à contrecourant sous une pression de 200 bar environ :
- 100 parties en poids d'un premier liquide réactif (liquide A chauffé à environ 70°C), fabriqué préalablement de manière connue comme indiqué dans la demande WO 2013/182477 précitée, à partir d'environ 45 parties de 4,4'-MDI (soit environ 34 kg de « Suprasec » 1306 de la société Huntsman, à l'état liquide) et environ 55 parties de polyol à fort taux d'oxyde d'éthylène (soit environ 41 kg de « Lupranol 2048 » de la société BASF ; Mn égale à environ 4100 g/mol) ; en fin de fabrication, ce produit contenait environ 60% en poids de MDI à l'état libre, il s'agit donc de manière connue d'une solution de polyol prépolymérisé, dans cette fraction de MDI à l'état libre ; son pourcentage de liaisons -NCO (% en masse, mesuré selon la norme EN 1242) était égal à 13,5% ;
- avec un second liquide réactif chauffé à environ 30°C (environ 54 parties de liquide B rapportées à 100 parties de liquide A), comportant l'autre partie du polyol à fort taux d'oxyde d'éthylène (environ 51 parties) et de l'eau (environ 3 parties) en tant qu'agent de moussage ; l'indice NCO/OH était égal à environ 0,9 ; le liquide B comportait en outre les additifs qui suivent en très faible quantité: 0,5 part de glycérine et 0,3 part de diaza-bicyclo-2,2,2-octane.

Le liquide moussant a été coulé in situ dans la cavité de pneus de marque « MICHELIN » (« Primacy HP »), dimensions 255/45 R18, maintenus en rotation (30 tours/min) autour de leur axe horizontal, sous la forme d'un cordon (12) continu sensiblement cylindrique (diamètre d'environ 30 mm) enroulé 3 fois sous le sommet (comme illustré schématiquement à la figure 1) selon un angle compris entre 1,5 et 2,0 degrés par rapport à la direction circonférentielle du bandage. La mousse produite ainsi in situ (masse volumique apparente à coeur égale à environ 45 g/dm³) présentait par ailleurs une excellente adhésion sur la gomme intérieure (enduite de badigeon) du pneu.

Puis les pneus ainsi préparés ont été gonflés à 2,5 bars et soumis à un test de roulage et test d'absorption acoustique tels que décrits ci-après, et comparés à des pneus témoins rigoureusement identiques hormis l'absence de mousse PU dans la cavité de ces pneus témoins.

L'évaluation de la performance vis-à-vis du bruit de cavité a été réalisée comme indiqué dans la demande WO 2013/182477 précitée, par roulage des pneus testés sur une piste macro-rugueuse (béton bitumineux de granulométrie 6 mm, avec une macro-texture de 0,4 à 0,5 mm). Le bruit est enregistré à l'intérieur du véhicule (marque « MERCEDES », « Classe S ») à l'aide d'un mannequin équipé d'une tête acoustique (microphones placés au fond d'oreilles artificielles). La vitesse est stabilisée et on réalise 4 enregistrements de 20 s chacun à une fréquence de 4 kHz. On calcule le spectre (résolution de 1 Hz) du signal temporel enregistré et on moyenne les auto-spectres de chacune des deux oreilles et de chacun des quatre enregistrements. Le bruit de cavité est celui mesuré (moyenné) dans un domaine de fréquence s'étendant de 180 à 230 Hz, caractéristique de la résonance de la cavité d'air contenue dans le pneu. A une vitesse de 60 km/h, on a constaté que ce bruit de cavité était réduit d'environ 2,5 dB(A) par rapport aux bandages témoins. Ce résultat est exprimé en énergie acoustique (dB(A)) qui correspond à l'intégration de la pression acoustique en fonction de la fréquence sur le domaine de fréquence considéré.

La performance en termes de réduction du bruit de cavité s'est donc révélée sensiblement identique à celle décrite dans la demande WO 2013/182477 citée en introduction du présent mémoire, ce qui atteste d'une qualité de mousse PU équivalente, malgré un procédé de fabrication et des formulations de liquides A et B notablement modifiées.

En conclusion, grâce à la formulation spécifique du polyuréthane et en particulier à son taux très élevé d'oxyde d'éthylène, il s'est avéré possible, de manière inattendue sans dégrader les propriétés et performance de la mousse finale, d'augmenter de manière importante la quantité de polyol dans le liquide B, en s'éloignant ainsi notablement de la voie « prépolymère » (pré-réaction totale du MDI et du polyol) préconisée par l'art antérieur, et par là-même d'utiliser des machines de mélangeage à haute pression, nettement plus avantageuses du point de vue industriel.

## Revendications

1. Procédé de fabrication d'une mousse de polyuréthane à base de MDI (diphénylméthane diisocyanate) et d'un polyol à fort taux d'oxyde d'éthylène ayant un taux d'oxyde d'éthylène supérieur à 50 % (% en poids), dans lequel on mélange, sous pression, pour formation d'un liquide moussant précurseur de mousse de polyuréthane :
- un premier liquide réactif, dit liquide A, comportant d'une part un prépolymère uréthane à base d'une première partie du MDI et d'une première partie de ce polyol, d'autre part la seconde partie du MDI à l'état libre, ledit prépolymère étant en solution dans cette seconde partie de MDI à l'état libre ;
- avec un second liquide réactif, dit liquide B, comportant la seconde partie de ce polyol et de l'eau en tant qu'agent de moussage,
**caractérisé en ce que** la quantité de ce polyol à fort taux d'oxyde d'éthylène dans le liquide B représente entre 25% et 75% en poids du total de ce polyol.

2. Procédé selon la revendication 1, dans lequel la quantité dudit polyol dans le liquide B représente entre 30% et 70%, de préférence entre 35% et 55% en poids du total dudit polyol.

3. Procédé selon l'une quelconque des revendications 1 ou 2, dans lequel la quantité d'eau dans le liquide B est comprise entre 2 et 10 % en poids, de préférence dans un domaine de 3 à 8 % en poids.

4. Procédé selon l'une quelconque des revendications 1 à 3, dans lequel l'indice d'hydroxyle dudit polyol est compris entre 10 et 180, de préférence entre 20 et 120 mg de KOH/g.

5. Procédé selon l'une quelconque des revendications 1 à 4, dans lequel la masse moléculaire moyenne en nombre (Mn) dudit polyol est comprise entre 1000 et 12 000 g/mol, de préférence entre 2000 et 8000 g/mol.

6. Procédé selon l'une quelconque des revendications 1 à 5, dans lequel le rapport molaire de MDI sur ledit polyol est compris entre 2 et 10, de préférence entre 3 et 6.

7. Procédé selon l'une quelconque des revendications 1 à 6, dans lequel l'indice NCO lors du moussage est compris entre 0,7 et 1,3, de préférence entre 0,8 et 1,2.

8. Procédé selon l'une quelconque des revendications 1 à 7, dans lequel le rapport pondéral (liquide B / liquide A) est supérieur à 0,25, de préférence compris entre 0,3 et 1,0.

9. Procédé selon l'une quelconque des revendications 1 à 8, dans lequel le MDI est le seul diisocyanate utilisé, ou, si plusieurs diisocyanates sont utilisés, constitue le diisocyanate majoritaire en poids.

10. Procédé selon l'une quelconque des revendications 1 à 9, dans lequel le MDI est le 4,4'-diphénylméthane diisocyanate.

11. Procédé selon l'une quelconque des revendications 1 à 10, dans lequel le taux d'oxyde d'éthylène dudit polyol est supérieur à 70%, de préférence supérieur à 90%.

12. Procédé selon l'une quelconque des revendications 1 à 11, dans lequel le débit total des deux liquides A et B, lors du mélangeage, est compris entre 0,1 et 1 litre/min.

13. Procédé selon l'une quelconque des revendications 1 à 12, dans lequel le mélangeage des liquides A et B est réalisé par contre-courant à haute pression, et la pression de mélangeage est supérieure à 50 bars, de préférence supérieure à 100 bars.

14. Procédé selon l'une quelconque des revendications 1 à 13, dans lequel la température de mélangeage est comprise entre 20°C et 80°C, de préférence entre 25°C et 75°C.

15. Procédé selon l'une quelconque des revendications 1 à 14, dans lequel le liquide moussant précurseur de mousse de polyuréthane est coulé dans la cavité d'une enveloppe de pneumatique en rotation sur elle-même, pour formation et dépôt in situ de la mousse de polyuréthane à l'intérieur de ladite cavité.

## Patentansprüche

1. Verfahren zur Herstellung eines Polyurethanschaumstoffs auf Basis von MDI (Diphenylmethandiisocyanat) und einem Polyol mit hohem Ethylenoxid-Gehalt, das einen Ethylenoxid-Gehalt von mehr als 50 % (Gew.-%) aufweist, bei dem man unter Druck:
- eine als Flüssigkeit A bezeichnete erste reaktive Flüssigkeit, die einerseits ein Urethan-Prepolymer auf Basis eines ersten Teils des MDI und eines ersten Teils dieses Polyols und andererseits den zweiten Teil des MDI in freiem Zustand umfasst, wobei das Prepolymer in diesem zweiten Teil von MDI in freiem Zustand gelöst ist;
- mit einer als Flüssigkeit B bezeichneten zweiten reaktiven Flüssigkeit, die den zweiten Teil dieses Polyols und Wasser als Treibmittel umfasst,
mischt, wodurch eine schäumende Flüssigkeit, bei der es sich um eine Polyurethanschaumstoff-Vorstufe handelt, gebildet wird,
**dadurch gekennzeichnet, dass** die Menge dieses Polyols mit hohem Ethylenoxid-Gehalt in der Flüssigkeit B zwischen 25 und 75 Gew.-% der Gesamtheit dieses Polyols ausmacht.

2. Verfahren nach Anspruch 1, bei dem die Menge des Polyols in der Flüssigkeit B zwischen 30 und 70 Gew.-%, vorzugsweise zwischen 35 und 55 Gew.-%, der Gesamtheit des Polyols ausmacht.

3. Verfahren nach Anspruch 1 oder 2, bei dem die Wassermenge in der Flüssigkeit B zwischen 2 und 10 Gew.-%, vorzugsweise in einem Bereich von 3 bis 8 Gew.-%, liegt.

4. Verfahren nach einem der Ansprüche 1 bis 3, bei dem die Hydroxylzahl des Polyols zwischen 10 und 180 mg KOH/g, vorzugsweise zwischen 20 und 120 mg KOH/g, liegt.

5. Verfahren nach einem der Ansprüche 1 bis 4, bei dem das zahlenmittlere Molekulargewicht (Mn) des Polyols zwischen 1000 und 12000 g/mol, vorzugsweise zwischen 2000 und 8000 g/mol, liegt.

6. Verfahren nach einem der Ansprüche 1 bis 5, bei dem das Molverhältnis von MDI zu dem Polyol zwischen 2 und 10, vorzugsweise zwischen 3 und 6, liegt.

7. Verfahren nach einem der Ansprüche 1 bis 6, bei dem der NCO-Index bei der Verschäumung zwischen 0,7 und 1,3, vorzugsweise zwischen 0,8 und 1,2, liegt.

8. Verfahren nach einem der Ansprüche 1 bis 7, bei dem das Gewichtsverhältnis (Flüssigkeit B/Flüssigkeit A) größer als 0,25 ist und vorzugsweise zwischen 0,3 und 1,0 liegt.

9. Verfahren nach einem der Ansprüche 1 bis 8, bei dem das MDI das einzige verwendete Diisocyanat ist oder bei Verwendung von mehreren Diisocyanaten das gewichtsmäßig überwiegende Diisocyanat darstellt.

10. Verfahren nach einem der Ansprüche 1 bis 9, bei dem es sich bei dem MDI um 4,4'-Diphenylmethandiisocyanat handelt.

11. Verfahren nach einem der Ansprüche 1 bis 10, bei dem der Ethylenoxid-Gehalt des Polyols größer als 70 %, vorzugsweise größer als 90 %, ist.

12. Verfahren nach einem der Ansprüche 1 bis 11, bei dem die Gesamtströmungsrate der beiden Flüssigkeiten A und B beim Mischen zwischen 0,1 und 1 Liter/min liegt.

13. Verfahren nach einem der Ansprüche 1 bis 12, bei dem das Mischen der Flüssigkeiten A und B durch Hochdruck-Gegenstrom erfolgt und der Mischdruck größer als 50 bar, vorzugweise größer als 100 bar, ist.

14. Verfahren nach einem der Ansprüche 1 bis 13, bei dem die Mischtemperatur zwischen 20 °C und 80 °C, vorzugsweise zwischen 25 °C und 75 °C, liegt.

15. Verfahren nach einem der Ansprüche 1 bis 14, bei dem die schäumende Flüssigkeit, bei der es sich um eine Polyurethanschaumstoff-Vorstufe handelt, in den Hohlraum eines sich um sich selbst drehenden Reifenmantels gegossen wird, wodurch der Polyurethanschaumstoff in dem Hohlraum in situ gebildet und abgeschieden wird.

## Claims

1. Method for manufacturing a polyurethane foam based on MDI (diphenylmethane diisocyanate) and on a polyol with a high ethylene oxide content having an ethylene oxide content of greater than 50% (% by weight), in which the following are mixed, under pressure, to form a foaming liquid precursor of polyurethane foam:
- a first reactive liquid, referred to as liquid A, comprising on the one hand a urethane prepolymer based on a first portion of the MDI and on a first portion of this polyol, and on the other hand the second portion of the MDI in the free state, said prepolymer being dissolved in this second portion of MDI in the free state;
- with a second reactive liquid, referred to as liquid B, comprising the second portion of this polyol and water as foaming agent,
**characterized in that** the amount of this polyol with a high content of ethylene oxide in the liquid B represents between 25% and 75% by weight of the total of this polyol.

2. Method according to Claim 1, wherein the amount of said polyol in the liquid B represents between 30% and 70%, preferably between 35% and 55% by weight of the total of said polyol.

3. Method according to either of Claims 1 and 2, wherein the amount of water in the liquid B is between 2 and 10% by weight, preferably in a range from 3 to 8% by weight.

4. Method according to any one of Claims 1 to 3, wherein the hydroxyl number of said polyol is between 10 and 180, preferably between 20 and 120 mg KOH/g.

5. Method according to any one of Claims 1 to 4, wherein the number-average molecular weight (Mn) of said polyol is between 1000 and 12 000 g/mol, preferably between 2000 and 8000 g/mol.

6. Method according to any one of Claims 1 to 5, wherein the molar ratio of MDI to said polyol is between 2 and 10, preferably between 3 and 6.

7. Method according to any one of Claims 1 to 6, wherein the NCO index during foaming is between 0.7 and 1.3, preferably between 0.8 and 1.2.

8. Method according to any one of Claims 1 to 7, wherein the weight ratio (liquid B / liquid A) is greater than 0.25, preferably between 0.3 and 1.0.

9. Method according to any one of Claims 1 to 8, wherein MDI is the only diisocyanate used, or, if several diisocyanates are used, it constitutes the predominant diisocyanate by weight.

10. Method according to any one of Claims 1 to 9, wherein the MDI is 4,4'-diphenylmethane diisocyanate.

11. Method according to any one of Claims 1 to 10, wherein the content of ethylene oxide of said polyol is greater than 70%, preferably greater than 90%.

12. Method according to any one of Claims 1 to 11, wherein the total flow rate of the two liquids A and B, during mixing, is between 0.1 and 1 litre/min.

13. Method according to any one of Claims 1 to 12, wherein the liquids A and B are mixed using high-pressure counter-current and the mixing pressure is greater than 50 bar, preferably greater than 100 bar.

14. Method according to any one of Claims 1 to 13, wherein the mixing temperature is between 20°C and 80°C, preferably between 25°C and 75°C.

15. Method according to any one of Claims 1 to 14, wherein the foaming liquid precursor of polyurethane foam is cast into the cavity of a tyre casing rotating on itself, to form and deposit *in situ* the polyurethane foam inside said cavity.
